# EUROPEAN PATENT APPLICATION

(11) **EP 2 657 570 A1**
(43) Date of publication of application: **30.10.2013**
(21) Application number: 12184154.8
(22) Date of filing: 13.09.2012
(51) Int. Cl.: F16H 9/18, F16H 57/03

(54) **Continuously variable transmission and saddle-ride type vehicle**

(30) Priority: 27.04.2012 JP 2012103611
(71) Applicant: Yamaha Hatsudoki Kabushiki Kaisha, Iwata-shi, Shizuoka 438-8501 (JP)
(72) Inventor: Tanaka, Daisuke, Iwata-shi, Shizuoka 438-8501 (JP)
(74) Representative: Grünecker, Kinkeldey, Stockmair & Schwanhäusser

(57) **Abstract**

A continuously variable transmission comprising a driving pulley (22) coupled to a crankshaft (13) of an engine (10), a driven pulley (23) disposed rearwards of the driving pulley (22), and a V-belt (24) wound around the driving pulley (22) and the driven pulley (23). A transmission case (21) accommodates the driving pulley (22), the driven pulley (23) and the V-belt (24), the transmission case (21) including a first inner surface (201S), a second inner surface (202S) and a first rib (101-105). The first inner surface (201 S) extends in a first direction. The crankshaft (13) is inserted into the first inner surface (201S). The second inner surface (202S) extends in a second direction. The second inner surface (202S) is connected with the first inner surface (201 S). The first rib (101-105) is connected with the first inner surface (201 S) and the second inner surface (202S), the first rib (101-105) overlapped with the V-belt (24) in a plan view of the first inner surface (201 S), and a width of the first rib (101-105) in the second direction increased as the distance from the second inner surface (202S) decreases.

## Description

The present invention relates to a continuously variable transmission equipped with a transmission case and a saddle-ride type vehicle.

Saddle-ride type vehicles, including a plurality of ribs shaped in a lattice form on the outer surface of a transmission case coupled to a unit-swing type engine, have been well known so far (JP-Y2-H03-040711).

In the saddle-ride type vehicle described in JP-Y2-H03-040711, however, the size of the transmission case in itself is increased due to the ribs formed on the outer surface of the transmission case. Therefore, the transmission case is likely to resonate with up-and-down pivot of the unit-swing type engine, and may thereby produce noise.

It is an object of the present invention to provide a continuously variable transmission and a saddle-ride type vehicle having such continuously variable transmission that inhibit resonance of a transmission case. According to the present invention said object is solved by a continuously variable transmission having the features of independent claim 1. Said object is also solved by saddle-ride type vehicle having the features of claim 11. Preferred embodiments are laid down in the dependent claims

A continuously variable transmission according to a first aspect includes a driving pulley, a driven pulley, a V-belt and a transmission case. The driving pulley is coupled to a crankshaft of an engine. The driven pulley is disposed rearwards of the driving pulley. The V-belt is wound around the driving pulley and the driven pulley. The transmission case accommodates the driving pulley, the driven pulley and the V-belt. The transmission case includes a first inner surface, a second inner surface and a first rib. The first inner surface is formed for extending in an up-and-down direction. The crankshaft inserted into the first inner surface, the second inner surface extending in a right-and-left direction. The second inner surface is formed for extending in a right-and-left direction. The second inner surface is connected with the first inner surface. The first rib is connected with the first inner surface and the second inner surface. The first rib is overlapped with the V-belt in a plan view of the first inner surface. A width of the first rib in the right-and-left direction is increased as the distance from the second inner surface decreases.

According to the continuously variable transmission of the first aspect, the stiffness of the transmission case can be enhanced by the first rib. The transmission case can be thereby inhibited from resonating with the up-and-down pivot of an engine unit. Therefore, noise can be inhibited from being produced from the transmission case. Further, the first rib is disposed inside the transmission case. Therefore, the size increase of the transmission case can be inhibited compared to the structure that the first rib is disposed outside the transmission case.

A continuously variable transmission according to a second aspect relates to the continuously variable transmission according to the first aspect. In the continuously variable transmission, the second inner surface is positioned higher than the V-belt. Further, the first rib is positioned higher than the crankshaft.

According to the continuously variable transmission of the second aspect, the first rib can enhance the stiffness of a part of the transmission case, i.e., a part disposed away from a support shaft. Therefore, resonance of the transmission case can be more effectively inhibited.

A continuously variable transmission according to a third aspect relates to the continuously variable transmission according to one of the first and second aspects of the present invention. In the continuously variable transmission, the transmission case includes a third inner surface and a second rib. The third inner surface is opposed to the second inner surface while being connected with the first inner surface. The second rib is connected to the first inner surface and the third inner surface while being overlapped with the V-belt in the plan view of the first inner surface. A width of the second rib in the right-and-left direction is increased as the distance from the third inner surface decreases.

According to the continuously variable transmission of the third aspect, the first rib and the second rib can enhance the stiffness of the transmission case in a good balance between the upper part and the lower part of the transmission case. Therefore, resonance of the transmission case can be more effectively inhibited.

A continuously variable transmission according to a fourth aspect relates to the continuously variable transmission according to the third aspect. In the continuously variable transmission, the second rib is disposed on an opposite side of the first rib through the V-belt. Further, the first rib and the second rib are extended in a predetermined direction similarly to each other in the plan view of the first inner surface.

According to the continuously variable transmission of the fourth aspect, the first rib and the second rib are disposed in parallel to each other. The transmission case can be thereby inhibited from vibrating in the up-and-down direction. Therefore, when chances are that the transmission case resonates with minute vibration in the up-and-down direction, resonance of the transmission case can be more effectively inhibited.

A continuously variable transmission according to a fifth aspect relates to the continuously variable transmission according to the fourth aspect. In the continuously variable transmission, the first rib and the second rib are integrally formed.

According to the continuously variable transmission of the fifth aspect, the strength of the first rib and that of the second rib can be both enhanced. Therefore, resonance of the transmission case can be more effectively inhibited.

A continuously variable transmission according to a sixth aspect relates to the continuously variable transmission according to one of the first to fifth aspects of the present invention. In the continuously variable transmission, the transmission case is connected to the first inner surface and the second inner surface. The transmission case includes a third rib. The third rib is connected to the first inner surface and the second inner surface. The third rib is overlapped with the V-belt in the plan view of the first inner surface. The first rib and the third rib are extended in directions different from each other in the plan view of the inner surface.

According to the continuously variable transmission of the sixth aspect, the first rib and the second rib are not disposed in parallel to each other. The transmission case can be thereby inhibited from vibrating in a plurality of directions. Therefore, when chances are that the transmission case resonates with minute vibration in a plurality of directions, resonance of the transmission case can be more effectively inhibited.

A continuously variable transmission according to a seventh aspect relates to the continuously variable transmission according to one of the first to sixth aspects of the present invention. In the continuously variable transmission, the first rib has a slope slanted with respect to the second inner surface seen from a rear side.

According to the continuously variable transmission of the seventh aspect, the first rib is formed to have a gradually increased width. Therefore, the weight of the first rib can be reduced while the V-belt can be inhibited from interfering with the first rib.

A continuously variable transmission according to an eighth aspect relates to the continuously variable transmission according to one of the first to seventh aspects of the present invention. In the continuously variable transmission, the transmission case includes a straight plate portion and a curved plate portion. The straight plate portion forms the second inner surface. The curved plate portion is coupled to the straight plate portion while being disposed laterally to the driving pulley. A thickness of the straight plate portion is greater than a thickness of the curved plate portion.

According to the continuously variable transmission of the eighth aspect, the first rib can be rigidly supported by the straight plate portion. Therefore, resonance of the transmission case can be more effectively inhibited.

A continuously variable transmission according to a ninth aspect relates to the continuously variable transmission according to one of the first to eighth aspects of the present invention. In the continuously variable transmission, the first rib includes a base portion and a slant portion. The base portion is connected to the first inner surface and the second inner surface. The slant portion is disposed on the base portion while being connected to the second inner surface. A width of the slant portion in the right-and-left direction is increased as the distance from the second inner surface decreases.

According to the continuously variable transmission of the ninth aspect, the weight increase of the continuously variable transmission device can be inhibited while the V-belt can be inhibited from interfering with the first rib.

A saddle-ride type vehicle according to a tenth aspect includes an engine unit and a vehicle body frame. The engine unit includes the continuously variable transmission according to the first aspect and an engine. The vehicle body frame rotatably supports the engine unit.

According to the saddle-type vehicle of the tenth aspect, noise can be inhibited from being produced from the transmission case while the size increase of the transmission case can be inhibited.

A saddle-ride type vehicle according to an eleventh aspect relates to the saddle-ride type vehicle according to the tenth aspect. In the saddle-ride type vehicle, the engine unit is coupled to the vehicle body frame at a position lower than the crankshaft. The first rib is positioned higher than the crankshaft.

According to the saddle-ride type vehicle of the eleventh aspect, the first rib can enhance the stiffness of a part of the transmission case, i.e., a part disposed away from a support shaft. Therefore, resonance of the transmission case can be more effectively inhibited.

### <Advantageous Effects of Invention>

Overall, according to the present teaching, it is possible to inhibit resonance of a transmission case in a continuously variable transmission and a saddle-ride type vehicle.

### BRIEF DESCRIPTION OF THE DRAWINGS

Referring now to the attached drawings which form a part of this original disclosure:

FIG. 1 is a side view of a saddle-ride type vehicle 1;

FIG. 2 is a transparent side view of an engine unit;

FIG. 3 is a cross-sectional view of FIG. 2 sectioned along a line III-III;

FIG. 4 is a perspective view of an inner case;

FIG. 5 is an enlarged perspective view of the inner case; and

FIG. 6 is a cross-sectional view of FIG. 2 sectioned along a line VI-VI.

### DETAILED DESCRIPTION OF THE PREFERRED EMBODIMENTS

Next, an exemplary embodiment will be explained using figures. In the following description of the figures, the same or similar reference numeral is given to the same or similar elements. It should be noted that the figures are schematic only and respective dimensional ratios and etc. of the figures may be different from actual ones. Therefore, specific dimensions and etc. should be judged in view of the following explanation. Further, it is apparent that dimensional relations and ratios of corresponding parts/portions/sections are different among the figures.

### (Schematic Structure of Saddle-Ride Type Vehicle 1)

A schematic structure of a saddle-ride type vehicle 1 according to an exemplary embodiment will be hereinafter explained with reference to the figures. It should be noted in the present exemplary embodiment that "a back-and-forth direction" refers to a vehicle longitudinal direction seen from a rider seated on a seat 5 to be described. "A right-and-left direction" refers to a vehicle transverse direction seen from a rider seated on the seat 5. "An up-and-down direction" refers to a vertical direction. Said up-and-down direction of the vehicle relates to a first direction. Said right-and-left direction of the vehicle relates to a second direction. Said back-and-forth direction of the vehicle relates to a third direction. The first direction, the second direction and the third direction are perpendicular to each other. Yet further, in the present exemplary embodiment, "outside" or "outer" refers to a direction away from a vehicle center line that is extended in the back-and-forth direction while passing through the vehicle center in the vehicle transverse (width) direction. On the other hand, "inside" or "inner" refers to a direction closer to the vehicle center line that is extended in the back-and-forth direction while passing through the vehicle center in the vehicle transverse direction.

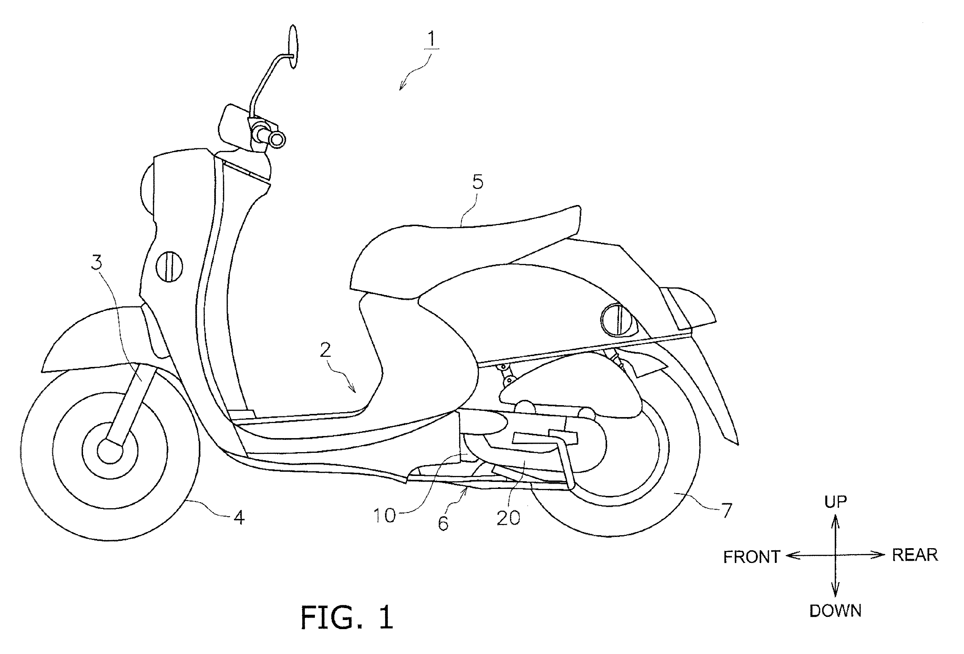

FIG. 1 is a side view of the saddle-ride type vehicle 1 according to the present exemplary embodiment. The saddle-ride type vehicle 1 is a scooter type motorcycle. The saddle-ride type vehicle 1 includes a vehicle body 2, a front fork 3, a front wheel 4, the seat 5, an engine unit 6, a continuous variable transmission 20 and a rear wheel 7.

The vehicle body 2 includes a vehicle body frame and a vehicle body cover. The vehicle body frame rotatably supports the engine unit 6, whereas the vehicle body cover covers the vehicle body frame. The front fork 3 supports the front wheel 4 in a rotatable state. The seat 5 is disposed on the vehicle body 2 while being disposed behind the front fork 3.

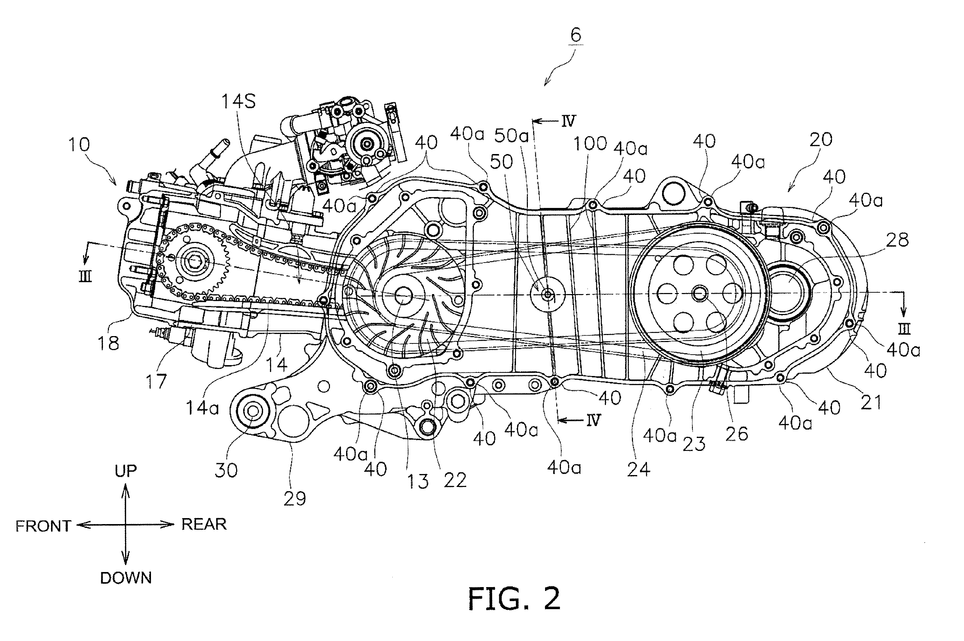

The engine unit 6 is disposed under the seat 5. The engine unit 6 is supported by the vehicle body frame while being pivotable about a support shaft 30 (not illustrated in FIG. 1, see FIG. 2). The engine unit 6 includes an engine 10 and the continuously variable transmission 20. The continuously variable transmission 20 supports the rear wheel 7 in a rotatable state.

### (Structure of Engine Unit 6)

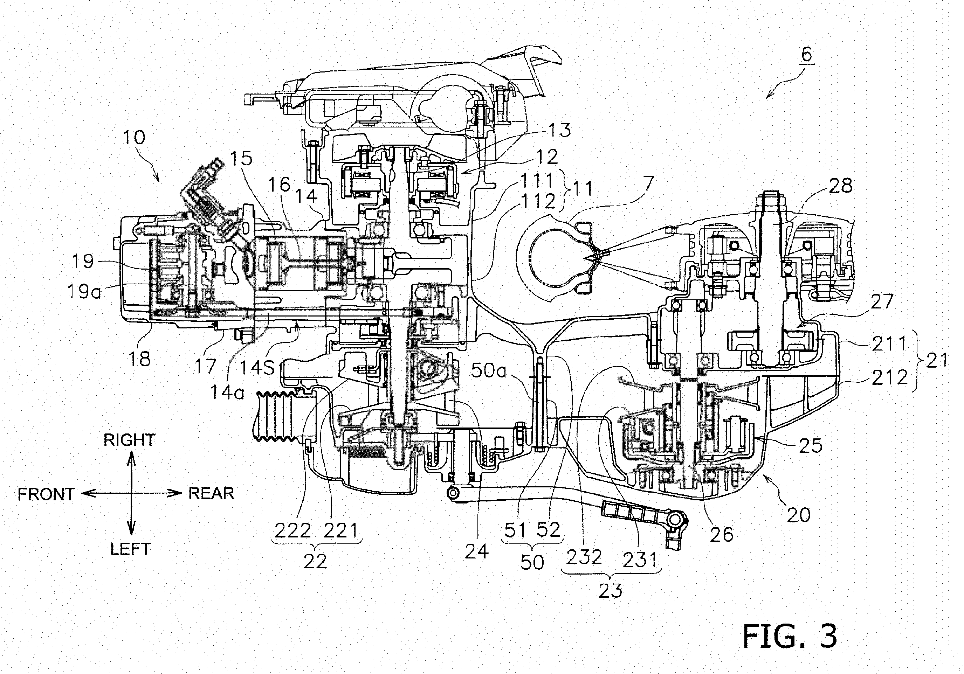

Next, a structure of the engine unit 6 will be explained with reference to the figures. FIG. 2 is a transparent side view of the engine unit 6. FIG. 3 is a cross-sectional view of FIG. 2 sectioned along a line III-III.

The engine unit 6 is supported by the vehicle body frame while being pivotable about the support shaft 30. The support shaft 30 is disposed along the right-and-left direction.

The engine 10 includes a crankcase 11, a power generator 12, a crankshaft 13, a cylinder body 14, a piston 15, a connecting rod 16, a cylinder head 17, a cylinder head cover 18 and a valve train mechanism 19. Meanwhile, the continuously variable transmission 20 includes a transmission case 21, a driving pulley 22, a driven pulley 23, a V-belt 24, a centrifugal clutch 25, an output shaft 26, a gear reducer 27, an axle 28 and a support part 29. The V-belt 24 extends within a plan in both the up-and-down (first) direction and the back-and-forth (third) direction.

The crankcase 11 is disposed in front of a rear wheel 7 while being connected to the right side of the front end portion of the transmission case 21. The crankcase 11 accommodates the crankshaft 13. As illustrated in FIG. 3, the crankcase 11 is formed by a right case 111 and a left case 112. In the present exemplary embodiment, the left case 112 is integrally formed with an inner case 211 of the transmission case 21 to be described.

The power generator 12 is disposed on the right side of the crankcase 11. The power generator 12 is configured to generate power by means of rotational force of the crankshaft 13.

The crankshaft 13 is disposed within the crankcase 11 along the right-and-left (second) direction. The right end portion of the crankshaft 13 is coupled to the power generator 12. The left end portion of the crankshaft 13 is inserted through the inner case 211 of the transmission case 21. The driving pulley 22 is disposed on the left end portion of the crankshaft 13. Further, a cam chain 14a to be described is wound around the crankshaft 13. The rotational force of the crankshaft 13 is transmitted to the rear wheel 7 through the driving pulley 22, the V-belt 24, the driven pulley 23 and etc.

The cylinder body 14 is connected to the front side of the crankcase 11. The cylinder body 14 accommodates the piston 15 and the connecting rod 16. The piston 15 is supported within the cylinder body 14 while being movable in a reciprocatory manner. The connecting rod 16 is coupled to the piston 15 and the crankshaft 13. The reciprocatory action of the piston 15 is transmitted to the crankshaft 13 through the connecting rod 16. Further, a cam chain compartment 14S is formed within the cylinder body 14 for accommodating the cam chain 14a.

The cylinder head 17 is connected to the front side of the cylinder body 14. The cylinder head cover 18 is connected to the front side of the cylinder head 17. The cylinder head 17 and the cylinder head cover 18 accommodate the valve train mechanism 19 in the inside thereof. The valve train mechanism 19 includes a camshaft 19a about which the cam chain 14a is wound.

The transmission case 21 accommodates the driving pulley 22, the driven pulley 23, the V-belt 24, the centrifugal clutch 25, the output shaft 26 and the gear reducer 27. The transmission case 21 is formed by the inner case 211 and an outer case 212. The inner case 211 is integrally formed with the left case 112 of the crankcase 11. The crankshaft 13 is inserted through the inner case 211. The inner case 211 and the outer case 212 are coupled at a plurality of outer peripheral fixation portions 40 by means of a plurality of bolts 40a. Further, the inner case 211 and the outer case 212 are coupled at a middle fixation part 50 by means of a bolt 50a. The bolt 50a is fitted to a first middle fixation portion 51 and a second middle fixation portion 52. The first middle fixation portion 51 is formed in the middle of the inner case 211 in a side view. The second middle fixation portion 52 is formed in the middle of the outer case 212 in a side view. As illustrated in FIG. 2, a rib group 100 is formed on the inner surface of the inner case 211. The inner structure of the inner case 211 will be described below.

The driving pulley 22 is coupled to the left end portion of the crankshaft 13. The V-belt 24 is wound around the driving pulley 22. The driving pulley 22 includes a first stationary sheave 221 and a first movable sheave 222. The first stationary sheave 221 is fixed to the left end of the crankshaft 13. The first movable sheave 222 is supported inside the first stationary sheave 221 while being movable along the crankshaft 13. The first movable sheave 222 is configured to be further moved rightwards in proportion to increase in the rotational speed of the crankshaft 13.

The driven pulley 23 is disposed behind the driving pulley 22. The driven pulley 23 is coupled to the middle portion of the output shaft 26. The V-belt 24 is wound around the driven pulley 23. The driven pulley 23 includes a second stationary sheave 231 and a second movable sheave 232. The second stationary sheave 231 is fixed to the left end of the output shaft 26. The second movable sheave 232 is supported inside the second stationary sheave 231 while being movable along the output shaft 26. The second movable sheave 232 is configured to be further moved rightwards in proportion to increase in the rotational speed of the V-belt 24.

The V-belt 24 is wound around the driving pulley 22 and the driven pulley 23. In proportion to increase in the rotational speed of the crankshaft 13, the diameter of the V-belt 24 is increased at a part thereof wound around the driving pulley 22 while being reduced at a part thereof wound around the driven pulley 23. In the present exemplary embodiment, the moving trajectory of the V-belt 24 is overlapped with the rib group 100 in a side view as illustrated in FIG. 2.

In an engaged state, the centrifugal clutch 25 is configured to transmit the rotation of the driven pulley 23 to the output shaft 26. The output shaft 26 is coupled to the centrifugal clutch 25 and the gear reducer 27. The axle 28 is coupled to the gear reducer 27 and the rear wheel 7.

The support part 29 is connected to the bottom side of the front end portion of the transmission case 21. The support part 29 is forwardly protruded from the transmission case 21. The support shaft 30 is inserted through the front end portion of the support part 29. As illustrated in FIG. 2, the support shaft 30 is disposed lower than the crankshaft 13. Therefore, the engine unit 6 is coupled to the vehicle body frame at a position lower than the crankshaft 13.

### (Structure of Transmission Case 21)

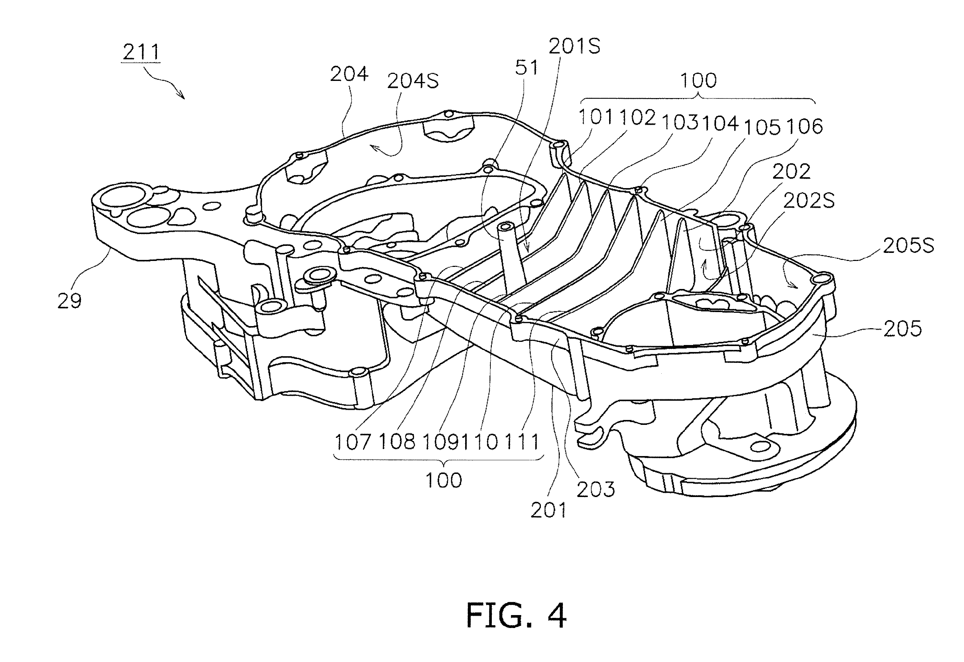

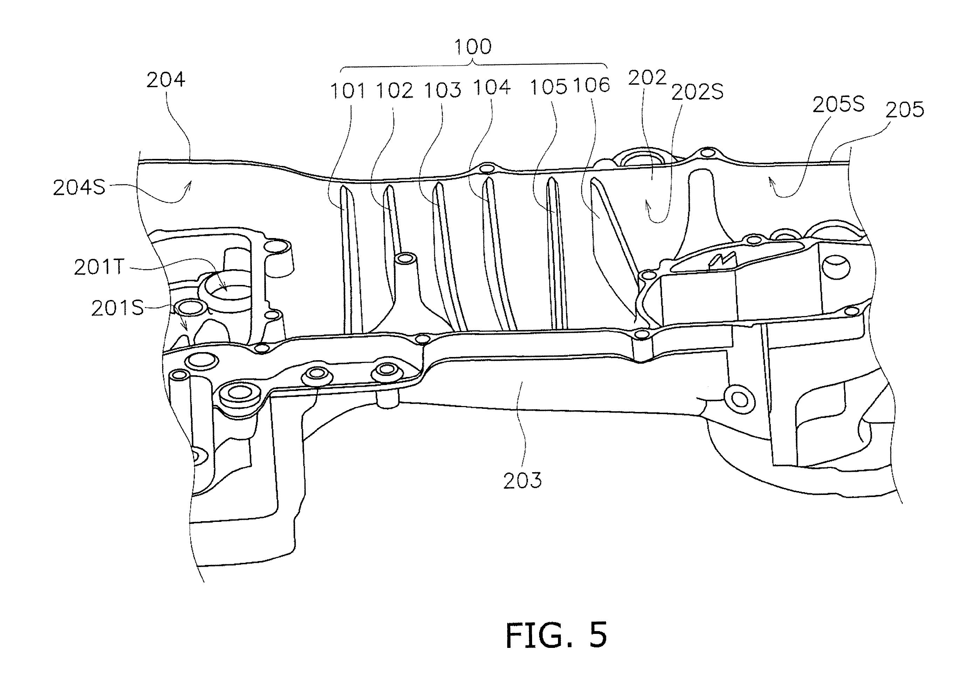

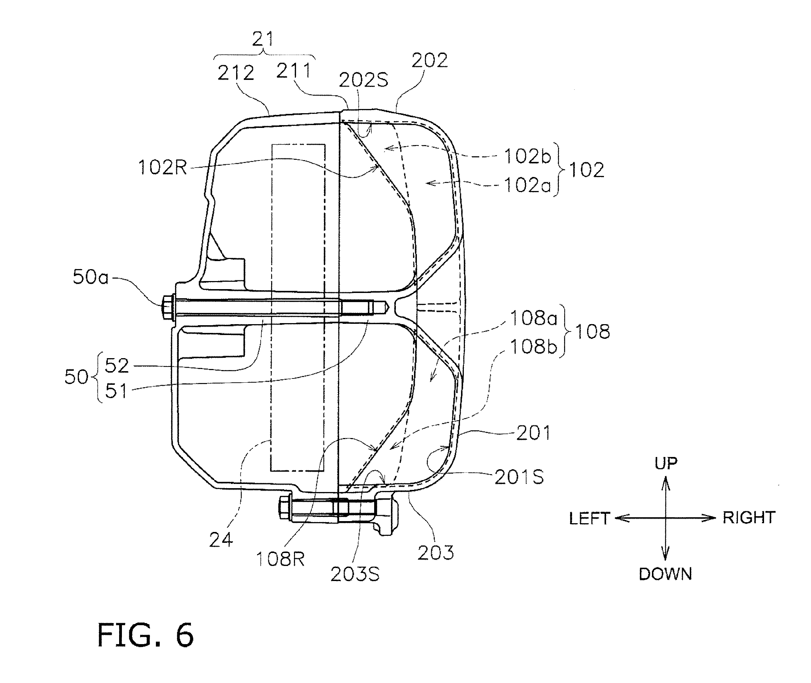

Next, a structure of the transmission case 21 will be explained with reference to the figures. FIG. 4 is a perspective view of the inner case 211. FIG. 5 is an enlarged perspective view of the inner case 211. FIG. 6 is a cross-sectional view of FIG. 2 sectioned along a line VI-VI. It should be noted that FIG. 6 illustrates an inner structure of the transmission case 21 as well as the cross-section of the transmission case 21.

The transmission case 21 includes an inner plate 201, an upper plate 202, a lower plate 203, a front plate 204, a rear plate 205 and the rib group 100. Each of the upper plate 202 and the lower plate 203 is an exemplary "straight plate portion" according to the present exemplary embodiment, while each of the front plate 204 and the rear plate 205 is an exemplary "curved plate portion" according to the present exemplary embodiment.

The inner plate 201 is positioned inwards of the driving pulley 22, the driven pulley 23 and the V-belt 24. The rib group 100 is disposed on the inner plate 201. The inner plate 201 has a first inner surface 201 S having a shape extended in both the up-and-down (first) direction and the back-and-forth (third) direction. The first inner surface 201S has a penetrating hole 201T for penetrating the crankshaft 13 therethrough.

The upper plate 202 is coupled to the upper end of the inner plate 201. The upper plate 202 is disposed higher than the V-belt 24. The upper plate 202 has a second inner surface 202S having a shape extended in both the right-and-left (second) direction and the back-and-forth (third) direction. The second inner surface 202S is coupled to the upper end of the first inner surface 201 S. The second inner surface 202S is positioned higher than the V-belt 24. The second inner surface 202S is facing the V-belt 24 in first direction. The upper plate 202 supports the upper sides of upper ribs 101 to 106 to be described. Therefore, the upper plate 202 has a plate thickness greater than that of the inner plate 201, that of the front plate 204 and that of the rear plate 205.

The lower plate 203 is coupled to the lower end of the inner plate 201. The lower plate 203 is disposed lower than the V-belt 24. The lower plate 203 has a third inner surface 203S having a shape extended in both the right-and-left (second) direction and the back-and-forth (third) direction. The third inner surface 203S is connected with the lower end of the first inner surface 201 S. The third inner surface 203S is opposed to the second inner surface 202S while being positioned lower than the V-belt 24. The third inner surface 203S is facing the V-belt 24 in first direction.
The lower plate 203 supports the bottom sides of lower ribs 107 to 111 to be described. Therefore, the lower plate 203 has a plate thickness that is greater than that of the inner plate 201, that of the front plate 204 and that of the rear plate 205 and is equivalent to that of the upper plate 202.

The front plate 204 encloses the top side, the front side and the bottom side of the driving pulley 22. The front plate 204 has a fourth inner surface 204S connected with the front end of the first inner surface 201 S and that of the second inner surface 202S. The fourth inner surface 204S is facing the V-belt 24 in first and third direction.

The rear plate 205 encloses the top side, the rear side and the bottom side of the driven pulley 23. The rear plate 205 has a fifth inner surface 205S connected with the rear end of the first inner surface 201 S and that of the second inner surface 202S. The fifth inner surface 205S is facing the V-belt 24 in first and third direction.

The rib group 100 includes the upper ribs 101 to 106 and the lower ribs 107 to 111.

In a side view, the upper ribs 101 to 106 are positioned higher than the crankshaft 13 while being positioned between the driving pulley 22 and the driven pulley 23. As illustrated in FIG. 5, the upper ribs 101 to 105 are disposed roughly in parallel to each other. Therefore, in a vehicle side view (see FIG. 2), the upper ribs 101 to 105 are extended similarly to each other in the up-and-down direction. On the other hand, the upper rib 106 is disposed obliquely with respect to the upper ribs 101 to 105 as illustrated in FIG. 5. Therefore, in a plan view of the first inner surface 201 S (see FIG. 2), the upper rib 106 and the upper ribs 101 to 105 are extended in different directions

In a side view, the lower ribs 107 to 111 is positioned lower than the crankshaft 13 while being positioned between the driving pulley 22 and the driven pulley 23. The lower ribs 107 to 111 are disposed lower than the upper ribs 101 to 106. In other words, the lower ribs 107 to 111 are disposed on the opposite side of the upper ribs 101 to 106 through the V-belt 24. In a plan view of the first inner surface 201 S (see FIG. 2), the lower ribs 107 to 111 and the upper ribs 101 to 106 are extended similarly to each other in the up-and-down direction. Specifically, the lower rib 107 is integrally formed with the upper rib 101 while being continued to the lower side of the upper rib 101. The lower rib 108 is continuously formed with the lower side of the upper rib 102 through the first middle fixation portion 51. The lower ribs 109 to 111 are integrally formed with the upper ribs 103 to 106 while being continued to the lower sides of the upper ribs 103 to 106 on a one-to-one basis.

Next, structures of the upper ribs 101 to 106 and the lower ribs 107 to 111 will be explained with reference to FIG. 6. It should be noted that only the structure of the upper rib 102 and that of the lower rib 108 will be hereinafter explained because the structures of the upper ribs 101 to 106 are similar to each other and those of the lower ribs 107 to 111 are also similar to each other.

As illustrated in FIG. 6, the upper rib 102 is connected to the first inner surface 201 S and the second inner surface 202S. The width of the upper rib 102 in the right-and-left direction is increased as the distance from the second inner surface 202S decreased. Specifically, the upper rib 102 has a base portion 102a and a slant portion 102b. The base portion 102a is connected to the first inner surface 201 S and the second inner surface 202S. The base portion 102a is formed in a strap shape between the upper plate 202 and the first middle fixation portion 51. The slant portion 102b is disposed on the base portion 102a while being connected to the second inner surface 202S. Seen from the rear side, the slant portion 102b has a right triangular shape. Therefore, the slant portion 102b has a slope 102R slanted with respect to the second inner surface 202S. The width of the slant portion 102b in the right-and-left direction is increased as the distance from the second inner surface 202S decreased.

As illustrated in FIG. 6, the lower rib 108 is connected to the first inner surface 201 S and the third inner surface 203S. The width of the lower rib 108 in the right-and-left direction is increased as the distance from the third inner surface 203S decreased. Specifically, the lower rib 108 has a base portion 108a and a slant portion 108b. The base portion 108a is connected to the first inner surface 201 S and the third inner surface 203S. The base portion 108a is formed in a strap shape between the lower plate 203 and the first middle fixation portion 51. The slant portion 108b is disposed on the base portion 108a while being connected to the third inner surface 203S. Seen from the rear side, the slant portion 108b has a right triangular shape. Therefore, the slant portion 108b has a slope 108R slanted with respect to the third inner surface 203S. The width of the slant portion 108b in the right-and-left direction is increased as the distance from the third inner surface 203S decreased.

It should be noted that the V-belt 24 may enter between the upper rib 102 and the lower rib 108 due to vibration and/or gear shifting during travelling, although the upper rib 102 and the lower rib 108 are not overlapped with the V-belt 24 in the up-and-down direction as illustrated in FIG. 6.

### (Actions and Effects)

(1) The transmission case 21 according to the present exemplary embodiment is connected to the first inner surface 201 S and the second inner surface 202S, and includes the upper rib 102 overlapped with the V-belt 24 in a plan view of the first inner surface 201 S. The width of the upper rib 102 in the right-and-left direction is increased as the distance from the second inner surface 202S decreased.

Therefore, the stiffness of the transmission case 21 can be enhanced by the upper rib 102. The transmission case 21 can be thereby inhibited from resonating with the up-and-down pivot of the engine unit 6. As a result, nose can be inhibited from being produced from the transmission case 21. Further, the upper rib 102 is disposed inside the transmission case 21. Therefore, size increase of the transmission case 21 can be inhibited compared to the structure that the upper rib 102 is disposed outside the transmission case 21.

The aforementioned effect can be similarly achieved not only by the upper rib 102 but also by each of the upper ribs 101 to 106 and the lower ribs 107 to 111. It should be noted in the present exemplary embodiment that, where each of the upper ribs 101 to 106 is set as an exemplary rib, each of the lower ribs 107 to 111 is set as an exemplary second rib. By contrast, where each of the lower ribs 107 to 111 is set as an exemplary first rib, each of the upper ribs 101 to 106 is set an exemplary second rib.

(2) The second inner surface 202S is positioned over the V-belt 24, while the upper rib 102 is positioned higher than the crankshaft 13.

Therefore, the upper rib 102 can enhance the stiffness of a part of the transmission case 21, i.e., a part away from the support shaft 30. Therefore, resonance of the transmission case 21 can be more effectively inhibited.

The aforementioned effect can be also similarly achieved by each of the upper ribs 101 to 106 as well as by the upper rib 102.

(3) The transmission case 21 according to the present exemplary embodiment includes the lower rib 108. The lower rib 108 is connected to the first inner surface 201 S and the third inner surface 203S. The width of the lower rib 108 in the right-and-left direction is increased as the distance from the third inner surface 203S decreased.

Therefore, the stiffness of the transmission case 21 can be enhanced in a good balance between its upper and lower parts by means of the upper rib 102 and the lower rib 108. Resonance of the transmission case 21 can be thereby more effectively inhibited.

(4) The lower rib 108 is disposed on the opposite side of the upper rib 102 through the V-belt 24. In a plan view of the first inner surface 201 S, the upper rib 102 and the lower rib 108 are extended similarly to each other in the up-and-down direction (an exemplary predetermined direction).

Thus, the upper rib 102 and the lower rib 108 are disposed in parallel to each other. The transmission case 21 can be thereby inhibited from vibrating in the up-and-down direction. Therefore, when chances are that the transmission case 21 resonates with minute vibration in the up-and-down direction, resonance of the transmission case 21 can be more effectively inhibited.

(5) The upper rib 103 and the lower rib 109 are integrally formed.

Therefore, strength of the upper rib 103 and that of the lower rib 109 can be both enhanced. Resonance of the transmission case 21 can be thereby more effectively inhibited.

(6) In a plan view of the first inner surface 201 S, the upper rib 102 and the upper rib 106 are respectively extended in different directions.

Thus, the upper rib 102 and the upper rib 106 are not arranged in parallel to each other. The transmission case 21 can be thereby inhibited from vibrating in a plurality of directions. Therefore, when chances are that the transmission case 21 resonates with minute vibration in a plurality of directions, resonance of the transmission case 21 can be more effectively inhibited.

It should be noted in the present exemplary embodiment that the upper rib 102 is set as an exemplary first rib, whereas the upper rib 106 is set as an exemplary third rib.

(7) Seen from the rear side, the upper rib 102 has the slope 102R slanted with respect to the second inner surface 202S.

Thus, the upper rib 102 is formed to have a gradually extended width. Therefore, the upper rib 102 can be reduced in weight while the V-belt 24 can be inhibited from interfering with the upper rib 102.

(8) In the transmission case 21 according to the present exemplary embodiment, the upper plate 202 has a thickness greater than that of the front plate 204 and that of the rear plate 205.

Therefore, the upper rib 103 can be rigidly supported and resonance of the transmission case 21 can be thereby more effectively inhibited.

The effect can be also similarly achieved by the structure that the lower plate 203 has a thickness equivalent to that of the upper plate 202.

(9) The engine unit 6 according to the present exemplary embodiment is coupled to the vehicle body frame at a position lower than the crankshaft 13. The upper rib 103 is positioned higher than the crankshaft 13.

Therefore, the upper rib 102 can enhance the stiffness of a part of the transmission case 21, i.e., a part away from the support shaft 30. Resonance of the transmission case 21 can be thereby more effectively inhibited.

### (Other Exemplary Embodiments)

The present invention has been described with the aforementioned exemplary embodiment. However, it should not be understood that the description and figures, forming a part of this disclosure, are intended to limit the present invention. A variety of alternative exemplary embodiments, practical examples and operational techniques would be apparent for those skilled in the art from this disclosure.

(A) In the aforementioned exemplary embodiment, the transmission case 21 is provided with the rib group 100 including the upper ribs 101 to 106 and the lower ribs 107 to 111. However, the structure of the transmission case 21 is not limited to the above. The transmission case 21 may include only either of the upper ribs 101 to 106 and the lower ribs 107 to 111. Alternatively, the transmission case 21 may include only one of the upper ribs 101 to 106, and/or the transmission case 21 may include only one of the lower ribs 107 to 111. Yet alternatively, the transmission case 21 may include seven or more upper ribs and/or include three or more lower ribs.

(B) In the aforementioned exemplary embodiment, an exemplary structure of the rib group 100 has been explained. However, the structure of the rib group 100 is not limited to the above. For example, all the upper ribs 101 to 106 may be formed along different directions, and/or the upper ribs 101 to 106 and the lower ribs 107 to 111 may not be coupled to each other on a one-to-one basis.

(C) In the aforementioned exemplary embodiment, the slant portion 102b has a triangular shape seen from the rear side as illustrated in FIG. 6. However, the shape of the slant portion 102b is not limited to the above. The slant portion 102b may be formed in a rectangular shape, a semi-circular shape or etc. Even in this case, the width of the upper rib 102 can be increased as the distance from the second inner surface 202S decreased.

(D) In the aforementioned exemplary embodiment, the upper rib 102 has the base portion 102a. However, the structure of the upper rib 102 is not limited to the above. The upper rib 102 may be formed only by a triangular portion 102b. In this case, the triangular portion 102b is only required to be connected to the first inner surface 201 S and the second inner surface 202S.

(E) In the aforementioned exemplary embodiment, the scooter-type motorcycle has been explained as an exemplary saddle-ride type vehicle. However, the saddle-ride type vehicle is not limited to the above. The saddle-ride type vehicle may include an all-terrain vehicle, a snowmobile and etc. other than the motorcycle. Further, the motorcycle may include an off-road motorcycle, an on-road motorcycle, a moped and etc. other than the scooter-type motorcycle.

It is thus apparent that the present teaching encompasses a transmission case 21 connected to a first inner surface 201 S and a second inner surface 202S and having an upper rib 102 overlapped with a V-belt 24 in a plan view of the inner surface 201 S. The width of the upper rib 102 in a right-and-left direction is increased as the distance from the second inner surface 202S decreased.

### Industrial Applicability

According to the present teaching, it is possible to inhibit resonance of a transmission case in a continuously variable transmission and a saddle-ride type vehicle. Therefore, the present teaching is useful in the field of continuously variable transmissions and the field of saddle-ride type vehicles.

### Reference Signs List

- 1: Saddle-ride type vehicle
- 2: Vehicle body
- 6: Engine unit
- 10: Engine
- 11: Crankcase
- 12: Power generator
- 13: Crankshaft
- 14: Cylinder body
- 20: Continuously variable transmission
- 21: Transmission case
- 201: Inner plate
- 202: Upper plate
- 203: Lower plate
- 204: Front plate
- 205: Rear plate
- 22: Driving pulley
- 23: Driven pulley
- 24: V-belt
- 25: Centrifugal clutch
- 26: Output shaft
- 27: Gear reducer
- 28: Axle
- 29: Support part
- 100: Rib group
- 101-106: Upper rib
- 107-111: Lower rib

## Claims

1. A continuously variable transmission comprising:
a driving pulley (22) coupled to a crankshaft (13) of an engine (10);
a driven pulley (23) disposed rearwards of the driving pulley (22);
a V-belt (24) wound around the driving pulley (22) and the driven pulley (23);
a transmission case (21) accommodating the driving pulley (22), the driven pulley (23) and the V-belt (24), the transmission case (21) including a first inner surface (201 S), a second inner surface (202S) and a first rib (101-105),
the first inner surface (201 S) extending in a first direction, the crankshaft (13) inserted into the first inner surface (201 S),
the second inner surface (202S) extending in a second direction, the second inner surface (202S) connected with the first inner surface (201 S),
the first rib (101-105) connected with the first inner surface (201 S) and the second inner surface (202S), the first rib (101-105) overlapped with the V-belt (24) in a plan view of the first inner surface (201 S); and
a width of the first rib (101-105) in the second direction increased as the distance from the second inner surface (202S) decreases.

2. A continuously variable transmission according to claim 1, wherein the second inner surface (202S) is facing the V-belt (24) from a first side, and
the first rib (101-105) is positioned on said first side with regard to the crankshaft (13).

3. A continuously variable transmission according to one of claims 1 and 2, wherein the transmission case (21) includes:
a third inner surface (203S) opposed to the second inner surface (202S), the third inner surface (203S) connected with the first inner surface (201 S); and
a second rib (107-111) connected to the first inner surface (201 S) and the third inner surface (203S),
the second rib (107-111) overlapped with the V-belt (24) in the plan view of the first inner surface (201 S), and
a width of the second rib (107-111) in the second direction is increased as the distance from the third inner surface (203S) decreases.

4. A continuously variable transmission according to claim 3, wherein the second rib (107-111) is disposed on an opposite side of the first rib (101-105) through the V-belt (24), and
the first rib (101-105) and the second rib (107-111) are extended in a predetermined direction similarly to each other in the plan view of the first inner surface (201 S).

5. A continuously variable transmission according to claim 4, wherein the first rib (101-105) and the second rib (107-111) are integrally formed.

6. A continuously variable transmission according to one of claims 1 to 5, wherein the transmission case (21) include a third rib (106), the third rib (106) connected to the first inner surface (201S) and the second inner surface (202S), the third rib (106) overlapped with the V-belt (24) in the plan view of the first inner surface (201S), and
the first rib (101-105) and the third rib (106) are extended in directions different from each other in the plan view of the inner surface.

7. A continuously variable transmission according to one of claims 1 to 6, wherein the first rib (101-105) has a slope slanted with respect to the second inner surface (202S) seen in a third direction.

8. A continuously variable transmission according to one of claims 1 to 7, wherein the transmission case (21) includes:
a straight plate portion (202) forming the second inner surface (202S); and
a curved plate portion (204,205) coupled to the straight plate portion (202), the curved plate portion (204,205) disposed laterally to the driving pulley (22), and
a thickness of the straight plate portion (202) is greater than a thickness of the curved plate portion (204,205).

9. A continuously variable transmission according to one of claims 1 to 8, wherein the first rib (101-105) includes:
a base portion (102a) connected to the first inner surface (201S) and the second inner surface (202S), and
a slant portion (102b) disposed on the base portion (102a), the slant portion (102b) connected to the second inner surface (202S), and
a with of the slant portion (102b) in the second direction is increased as the distance from the second inner surface (202S) decreases.

10. A continuously variable transmission according to the claims 1 to 9, wherein the first direction, the second direction and the third direction are perpendicular to each other.

11. A saddle-ride type vehide comprising:
an engine unit (6) including the continuously variable transmission according to one of the claims 1 to 10 with the engine (10); and
a vehicle body frame rotatably supporting the engine unit (6).

12. A saddle-ride type vehicle according to claim 11, wherein the engine unit (6) is coupled to the vehicle body frame at a position lower than the crankshaft (13).

13. A saddle-rinde type vehicle according to claim 12, wherein the first rib (101-105) is positioned higher than the crankshaft (13).

14. A saddle-ride type vehide according to one of the claims 11 to 13, wherein the second inner surface (202S) is positioned higher than the V-belt (24).

15. A saddle-ride type vehicle according to the claims 11 to 14, wherein first direction is an up-and-down direction of the vehicle, the second direction is a right-and-left direction of the vehicle and the third direction is a badc-and-forth direction of the vehide.
